Europäisches Patentamt

(19) European Patent Office

Office européen des brevets

(11) Veröffentlichungsnummer : **0 013 724**
**B1**

(12) **EUROPÄISCHE PATENTSCHRIFT**

(45) Veröffentlichungstag der Patentschrift :
**16.02.83**

(21) Anmeldenummer : **79104989.3**

(22) Anmeldetag : **07.12.79**

(51) Int. Cl.³ : **A 21 D 15/02**

(54) **Verfahren zur Behandlung von tiefgefroren einzulagernden Backwaren.**

(30) Priorität : **27.12.78 DE 2856272**

(43) Veröffentlichungstag der Anmeldung :
**06.08.80 Patentblatt 80/16**

(45) Bekanntmachung des Hinweises auf die Patenterteilung : **16.02.83 Patentblatt 83/07**

(84) Benannte Vertragsstaaten :
**AT BE CH FR GB IT LU NL SE**

(56) Entgegenhaltungen :
**DE A 2 205 987**
**DE A 2 511 847**
**DE C 957 654**
**FR A 746 057**
**FR A 921 521**
**FR A 2 077 037**
**NL B 39 965**
**VOEDINGSMIDDELENTECHNOLOGIE, Nr. 14, 7.**
**April 1976, NL. J.C. KIM et al. : « Het diepvriezen**
**von krokante braadsoorten », Seiten 8, 9**
**VOEDINGSMIDDELENTECHNOLOGIE, Nr. 51/52,**
**3, 20. Dezember 1972, NL, BELDEROK et al. :**
**« Het diepvriezen van brood en banket. II De**
**produkten », Seiten 256-260**

(73) Patentinhaber : **Ratjen, Werner**
**Freeweid 12-14**
**D-2302 Flintbek (DE)**

(72) Erfinder : **Ratjen, Werner**
**Freeweid 12-14**
**D-2302 Flintbek (DE)**

(74) Vertreter : **Wilcken, Thomas, Dipl.-Ing. et al**
**Musterbahn 1**
**D-2400 Lübeck (DE)**

## Verfahren zur Behandlung von tiefgefroren einzulagernden Backwaren

Die Erfindung betrifft ein Verfahren zur Behandlung von tiefgefroren einzulagernden Backwaren, bei dem die jeweilige Backware nach dem Backprozeß und nach einer Behandlung mit Wasser in einer Tiefkühlanlage tiefgefroren und zwecks Vorbereitung zum Verzehr der Anlage entnommen und aufgetaut wird.

Backwaren haben bekanntlich die Eigenschaft, daß sie schon etwa 15 Minuten nach dem Backen und nach Erreichen einer Temperatur von 40 bis 50 °C « altbacken » werden. Bei diesem sogenannten Retrogrationsvorgang gibt die Stärke, die während des Backens das Teigwasser gebunden hat, dieses Wasser nach und nach wieder frei. Hierdurch wird die ursprünglich knusprige Kruste der Backware immer weicher und zäher, so daß die Ware nach gewisser Zeit nicht mehr die vom Verbraucher gewünschte Qualität hat.

Zur Qualitätsverbesserung solcher Backware wurde auch schon ein Verfahren zum Frischmachen von Gebäck vorgeschlagen (DE-A-2 205 987), bei dem Wasserdampf über Düsen in die Backware injiziert wird. Der Dampf soll Feuchtigkeit und Wärme in die Backware bringen. Mit diesem Verfahren kann sicherlich eine Kompensation der bei längerer Lagerung abgegebenen Feuchtigkeit erreicht werden. Allerdings wird dieses Verfahren sonst für die Praxis vor allem deshalb nicht geeignet sein, weil keine Verbesserung der Eigenschaften der Kruste möglich ist. Die Kruste alter Backware wird also zäh und weich bleiben, auch wenn man Wasserdampf mit relativ hoher Temperatur in die Krume injiziert. Es bleibt dem Bäcker also eigentlich nur die Möglichkeit, immer frische Ware zu backen, um seine Kunden durch gute Qualität der Produkte zufriedenzustellen.

Da es den Backbetrieben aus verständlichen Gründen nicht immer möglich ist, stets ofenfrische Ware in ausreichender Menge zum Verkauf anzubieten, ist man schon seit einigen Jahren dazu übergegangen, die Backware möglichst unmittelbar nach dem Backprozeß tiefzugefrieren und auf Vorrat einzulagern, so daß die Ware dann je nach Bedarf der Tiefkühlanlage wieder entnommen und nach dem Auftauen zum Verkauf kommen kann. Es handelt sich hierbei um eine im Prinzip frische und nicht altbackene Ware, da der Tiefgefriervorgang den erwähnten Retrogrationsprozeß dadurch verhindert bzw. unterbrochen hat, daß das in der Stärke gebundene Wasser eingefroren wurde.

Die Praxis zeigt, daß auf diese Weise Backwaren aller Art, wie etwa Brote, Brötchen und anderes Kleingebäck sowie Kuchen, durch Tiefgefrieren im fertiggebackenen Zustand einer kurzen oder auch längeren Lagerung überlassen werden können, ohne daß im Hinblick auf die geschmacklichen Qualitäten grundsätzlich Nachteile zu erwarten sind. Insoweit ermöglicht also dieses Bevorratungsverfahren ohne weiteres eine zeitgemäße Rationalisierung in handwerklichen und auch industriellen Backbetrieben.

Allerdings hat die Praxis auch gezeigt, daß das Tiefgefrieren von insbesondere Wasserbackwaren vielfach eine unangenehme Begleiterscheinung hat, und zwar die, daß sich die Kruste und die Krume beim Gefriervorgang voneinander lösen, so daß die Backware nicht mehr dem Kunden zum Verkauf angeboten werden kann. Somit sind die Bäckereien nach wie vor gezwungen, vor allem die von diesen Nachteilen betroffenen Brötchen und Brote sehr früh morgens, auch nachts unter teilweiser Mißachtung von Nacht-Backverboten und schließlich auch mehrfach am Tag zu backen, um ihren Kunden stets eine einwandfreie Ware anbieten zu können.

Das Ablösen der Kruste beispielsweise bei tiefgefrorenem Weißbrot oder bei Wasserbrötchen ist ein Problem, das schon lange bekannt ist und das man bisher nicht lösen konnte. Man führt diese Erscheinung, also die beim Tiefgefrieren auftretende Trennung von Kruste und Krume, u. a. darauf zurück, daß während des Einfrierens verschieden starke Volumenabnahmen in der Krume einerseits und der Kruste andererseits stattfinden, wodurch Spannungen in der Kruste entstehen und diese sich von der Krume ablöst. Eine andere Erklärung für diesen Vorgang ist die, daß Spannungen in der Kruste aufgrund einer Austrocknung durch Sublimation entstehen, wobei nicht so sehr die wasserreiche Krume, sondern mehr die hygroskopische Kruste austrocknen und sich deshalb von der Krume ablösen soll. Im übrigen ist allgemein zu beobachten, daß dieses Ablösen nicht unmittelbar am Übergang zwischen Krume und Kruste, sondern normalerweise in der direkt unter der Kruste gelegenen Krumenschicht stattfindet, weshalb dieser Ablösevorgang seine Ursache auch darin haben könnte, daß vor allem eine Austrocknung der äußeren Krumenschicht ein Schrumpfen des Krumenkörpers insgesamt verursacht, wodurch sich dieser von der im wesentlichen starren Kruste losreißt.

Unabhängig davon, welche Ursache dieser beim Tiefgefrieren von Backwaren auftretende Vorgang auch haben mag, ist festzustellen, daß bis jetzt keine Lösung zur Beseitigung des aufgezeigten Problems gefunden werden konnte. Man hat u. a. versucht, Backwaren durch Zusätze im Teig frischzuhalten, indem man als Zusätze Fruchtkernmehle, Emulgatoren, modifizierte Stärken, Fett und dergleichen verwendet hat. Es wurde auch versucht, Brötchen oder Weißbrot direkt nach dem Backen in einem Gärschrank bei einer Temperatur von 30 bis 35 °C und einer relativen Luftfeuchtigkeit von etwa 90 % für ungefähr eine bis zwei Stunden einzulagern und danach erst einzufrieren. Es handelt sich hierbei um das sogenannte Konditionierverfahren.

Die Anwendung der genannten Zusätze hat bisher in keinem Fall zu positiven Ergebnissen geführt. Das Konditionierungsverfahren hat abgesehen von beträchtlichem Arbeits- und Anlagenaufwand auch nicht befriedigen können, da die Kruste nach dem Konditionieren schlaff und zäh ist. In manchem Fall hat man allerdings erreichen können, daß wenigstens kein Ablösen der Kruste von der Krume aufgetreten ist. Dieser auch nur zeitweilig auftretende Vorteil bringt jedoch nichts, wenn die Kruste der Backware nicht den Anforderungen des Verbrauchers entspricht.

Das Ablösen der Kruste von der Krume bei tiefgefrorener Backware läßt sich nach einem anderen bekannten Vorschlag (Voedingsmiddelentechnologie Nr. 74, 7. April 1976, S. 8) zumindest weitgehend dadurch vermeiden, daß die fertig abgebackene Ware mit Wasser bespritzt bzw. besprüht und dann eingefroren wird. Dieses Verfahren hat aber vor allem den Nachteil, daß die Kruste durch das Wasser aufweicht und teilweise aufplatzt bzw. rissig wird mit der Folge, daß die Backware nach dem Auftauen zwar als frische Ware angesehen werden kann, aber vom Kunden nicht akzeptiert wird, weil eben die Kruste nicht so aussieht wie die einer frischgebackenen Ware. Außerdem ist es verständlich, daß mit einem Bespritzen der Backware nicht sichergestellt werden kann, daß genau dosierte Mengen an Wasser auf und in die Ware gelangen werden. Deshalb wird es nicht auszuschließen sein, daß ein Teil der Ware mit zu viel und ein anderer Teil mit zu wenig Wasser behandelt wird, so daß entweder die schon vorher angesprochenen Nachteile auftreten oder die Trennung von Kruste und Krume nicht verhindert wird.

Die Aufgabe der Erfindung besteht darin, ein Verfahren zur Vorbehandlung mit Wasser von tiefgefroren einzulagernden Backwaren vorzuschlagen, bei dessen Anwendung das nach der Lagerzeit schließlich wieder aufgetaute Produkt eine besonders gute Frische und geschmackliche Wirkung hat und bei dem vor allem gewährleistet ist, daß die Kruste durch den Behandlungsvorgang nicht verändert oder beschädigt wird und daß durch spezielle Dosierung der anzuwendenden Wassermenge sichergestellt werden kann, daß beim Einfrieren bzw. während der Lagerung im tiefgefrorenen Zustand eine Trennung von Kruste und Krume mit Sicherheit ausgeschlossen wird.

Zur Lösung dieser Aufgabe wird nach der Erfindung das eingangs erwähnte Verfahren so weitergebildet, daß das Wasser vor dem Tiefgefriervorgang in flüssigem oder dampfförmigem Zustand durch die Kruste in die Krume injiziert wird, und zwar mit einem Gewicht von 2 g bis 6 g, vorzugsweise etwa 4 g, bezogen auf 100 g fertiggebackene Backware.

Praktische Versuche unter Anwendung dieses Verfahrens bei Brötchen und Brot haben ergeben, daß weder beim anfänglichen Tiefgefriervorgang und dem dabei auftretenden Kälteschock noch während einer mehrwöchigen Lagerung der Backware in der Tiefkühlanlage eine Trennung bzw. ein Ablösen der Kruste von der Krume aufgetreten ist. Gleiches gilt dementsprechend für das aufgetaute Produkt, das darüber hinaus noch einen vergleichsweise frischeren und geschmacklich besseren Eindruck macht als die herkömmlich behandelten und ebenfalls tiefgefroren gelagerten Backwaren.

Diese Vorteile sind unter anderem darauf zurückzuführen, daß beispielsweise nach dem Injizieren von Wasserdampf in die Krume diese so mit Feuchtigkeit angereichert oder gar gesättigt ist, daß ein gewisser überschüssiger Wassergehalt vorhanden ist, der trotz längerer Lagerzeit des Produktes und trotz der damit naturgemäß auftretenden Feuchtigkeitsverluste dafür sorgt, daß nie der sonst zu Spannungen zwischen Kruste und Krume führende minimale Feuchtigkeitsgehalt erreicht wird, daß also der tatsächliche Feuchtigkeitsgehalt immer auf einem höheren Niveau liegt.

Die Eigenschaften der Kruste werden durch Injizieren von Wasser oder Wasserdampf nicht wie etwa beim Konditionieren nachteilig beeinflußt, weil nicht in die Kruste, sondern direkt in die Krume injiziert wird.

Zu diesem Zweck kann so vorgegangen werden, daß vorteilhafterweise der Boden bzw. die Bodenkruste der betreffenden Backware gleichzeitig mit mehreren Injektionsnadeln oder Kanülen durchstochen wird und z. B. Wasserdampf unter entsprechendem Druck über die bis in die Krume gestochenen Nadeln in die Krume eingeführt wird und sich dort zur Erhöhung des nach dem Backvorgang verbliebenen Feuchtigkeitsgehaltes im Krumenkörper verteilt. Das gleichzeitige Arbeiten mit mehreren Injektionsnadeln ist im Hinblick auf eine schnelle Arbeitsweise und auf eine gleichmäßige Feuchtigkeitsverteilung vorteilhaft. Andererseits wird allerdings auch nicht die Möglichkeit ausgeschlossen, daß auch nur mit einer einzelnen Nadel gearbeitet werden könnte, wenn sich dies aus arbeitstechnischen Gründen anbieten sollte.

Dieses « Impfen » der Krume könnte auch nadellos durchgeführt werden, indem man das betreffende Mittel impulsweise durch die Kruste in die Krume schießt, und zwar z. B. nach dem aus der medizinischen Technik bekannten Prinzip über Düsen bei entsprechend hohen Drücken.

Experimente mit diesem Injizierverfahren haben bisher gezeigt, daß es zwar grundsätzlich anwendbar ist, daß aber die Menge des in einem Arbeitsgang einzubringenden Mittels begrenzt ist und daß die hierfür erforderliche Anlage recht kompliziert und teuer ist.

Wenn also auch das nadellose Impfen der Krume nicht von vornherein ausgeschlossen ist, wurde bisher doch einfacher und effektiver mit Injektionsnadeln bzw. Kanülen gearbeitet, zumal über diese auch stets die erforderlichen Mittelmengen kurzzeitig injiziert werden können. Es sollte nämlich beispielsweise bei Wasserbackwaren, wie Brötchen, oder Weißbrot, Wasser oder Wasserdampf in einem Gewicht von 2 g bis 6 g, vorzugsweise etwa 4 g, bezogen auf 100 g fertiggebackene Backware injiziert werden, und dies läßt sich bei gleichzeitiger Anwendung mehrerer Injektionsnadeln in einem Arbeitsgang leicht erreichen, zumal diese Nadeln über entsprechende Verbindungen stets ausreichend mit Wasserdampf oder Wasser versorgt werden können.

Abschließend sei noch darauf hingewiesen, daß neben oder außer dem den Feuchtigkeitsgehalt erhöhenden Wasser oder Wasserdampf auch Mischungen von Wasser mit anderen Mitteln zur Anwendung kommen können, und zwar z. B. eine der nachfolgend angegebenen Mischungen mit einem Gewicht von etwa 2 g bis 6 g bezogen auf 100 g fertiggebackene Backware, nämlich a. 80 Gew.-% Wasser und 20 Gew.-% Dextrose, b. 95 Gew.-% Wasser und 5 Gew.-% Sorbit (Sorbitol) oder c. 90 Gew.-% Wasser, 5 Gew.-% Malzextrakt, 3 Gew.-% Maltodextrine und 2 Gew.-% Lezithin.

### Ansprüche

1. Verfahren zur Behandlung von tiefgefroren einzulagerden Backwaren, bei dem die jeweilige Backware nach dem Backprozeß und nach einer Behandlung mit Wasser in einer Tiefkühlanlage tiefgefroren und zwecks Vorbereitung zum Verzehr der Anlage entnommen und aufgetaut wird, dadurch gekennzeichnet, daß das Wasser vor dem Tiefgefriervorgang in flüssigem oder dampfförmigem Zustand durch die Kruste in die Krume injiziert wird, und zwar mit einem Gewicht von 2 g bis 6 g, vorzugsweise etwa 4 g, bezogen auf 100 g fertiggebackene Backware.

2. Verfahren nach Anspruch 1, dadurch gekennzeichnet, daß wahlweise eine der nachfolgend angegebenen Mischungen mit einem Gewicht von 2 g bis 6 g bezogen auf 100 g fertiggebackene Backware injiziert wird :
   a) 80 Gew.-% Wasser und 20 Gew.-% Dextrose,
   b) 95 Gew.-% Wasser und 5 Gew.-% Sorbit (Sorbitol),
   c) 90 Gew.-% Wasser, 5 Gew.-% Malzextrakt, 3 Gew.-% Maltodextrine und 2 Gew.-% Lezithin.

3. Verfahren nach den Ansprüchen 1 und 2, dadurch gekennzeichnet, daß durch die Bodenkruste der Backware injiziert wird.

4. Verfahren nach einem der Ansprüche 1 bis 3, dadurch gekennzeichnet, daß der Boden der Backware und ein anschließender Teil der Krume mittels Injektionsnadeln durchstochen wird, über die das erwähnte Mittel in die Krume eingebracht wird.

5. Verfahren nach einem der Ansprüche 1 bis 3, dadurch gekennzeichnet, daß nadellos über Spritzdüsen injiziert wird.

### Claims

1. Method of processing deep-frozen bakery products which are to be stored, in which the bakery product in question is deep-frozen in a deep-freezing plant after the baking operation and a treatment with water, and is removed from the plant and thawed for preparation for consumption, characterised in that prior to the deep-freezing operation, water is injected in the liquid or vaporous state through the crust and into the inside, that is to say in a weight of 2 g to 6 g and preferably approximately 4 g per 100 g of fully baked bakery product.

2. Method according to claim 1, characterised in that one of the mixtures specified below is optionally injected in a weight of 2 g to 6 g per 100 g of fully baked bakery product :
   a) 80 % by weight of water and 20 % by weight of dextrose,
   b) 95 % by weight of water and 5 % by weight of sorbitol,
   c) 90 % by weight of water, 5 % by weight of malt extract, 3 % by weight of maltodextrine and 2 % by weight of lecithin.

3. Method according to claims 1 and 2, characterised in that the injection is made through the base crust of the bakery product.

4. Method according to one of the claims 1 to 3, characterised in that the bottom of the bakery product and an adjacent portion of the inside is transpierced by injection needles through which the said fluid is introduced into the inside.

5. Method according to one of the claims 1 to 3, characterised in that the injection is performed without needles, through spray nozzles.

### Revendications

1. Procédé de traitement de produits de boulangerie ou de pâtisserie destinés à la conservation par congélation, produits qui dès leur cuisson sont, après un traitement approprié à l'eau, congelés dans un congélateur et qui en sont retirés et puis dégelés en vue de leur préparation pour la consommation, caractérisé en ce que l'eau est injectée à l'état liquide ou à l'état de vapeur dans la mie à travers la croûte avant la congélation, à raison de 2 à 6 g, de préférence d'environ 4 g, par 100 g de produit bien cuit.

2. Procédé selon la revendication 1, caractérisé en ce qu'on injecte au choix l'un ou l'autre des mélanges suivants à raison de 2 à 6 g par 100 g de produit bien cuit :
   a) 80 % d'eau et 20 % de glucose ;
   b) 95 % d'eau et 5 % de sorbitol ;
   c) 90 % d'eau, 5 % d'extrait de malt, 3 % de maltodextrine et 2 % de lécithine,
tous les pourcentages susmentionnés étant des pourcentages pondéraux.

3. Procédé selon les revendications précédentes 1 et 2, caractérisé en ce que ladite injection s'effectue à travers la croûte de base du produit de boulangerie ou de pâtisserie concerné.

4. Procédé selon l'une ou l'autre des revendications précédentes 1 à 3, caractérisé en ce que le fond du produit cuit et une partie adjacente de la mie sont percés à l'aide d'aiguilles d'injection par lesquelles l'agent de traitement concerné est introduit dans la mie.

5. Procédé selon l'une ou l'autre des revendications 1 à 3, caractérisé en ce que l'injection s'effectue à l'aide de tuyères en l'absence d'aiguilles.